# FASCICULE DE BREVET EUROPEEN

(11) **EP 1 041 800 B1**
(45) Date de publication et mention de la délivrance du brevet: **01.12.2004**
(21) Numéro de dépôt: 00460023.5
(22) Date de dépôt: 17.03.2000
(51) Int. Cl.: H04M 1/72, H04M 1/247

(54) **Terminal téléphonique, support de données amovible pourvu(s) de moyens permettant la suppression de fonctionnalités communes et procédé de gestion des menus de fonctionnalités correspondant**
Telefonendgerät, entmehmbarer Datenträger mit Mittel zur Unterdrückung von gemeinsamen Funktionalitäten, und Verfahren zur Verwaltung von Menüs
Telephone terminal, removable data carrier with means for suppressing common functionalities and method for managing menus of functionalities

(30) Priorité: 01.04.1999 FR 9904292
(43) Date de publication de la demande: 04.10.2000
(73) Titulaire: Société Française du Radiotéléphone-SFR, 75008 Paris (FR)
(72) Inventeur: de Kermadec, Alain M., 75007 Paris (FR)
(74) Mandataire: Vidon, Patrice

(56) Documents cités:
- FR-A- 2 761 219
- US-A- 5 887 266
- "Digital cellular telecommunication system (Phase 2+); Specification of the SIM Application Toolkit for the Subscriber Identity Module - Mobile Equipment (SIM-ME) interface" GSM TECHNICAL SPECIFICATION, GSM 11.14 VERSION 5.4.0, page 1-05,7,09- XP002064640

## Description

Le domaine de l'invention est celui des télécommunications. Plus précisément, l'invention concerne la mise en oeuvre et l'utilisation de terminaux téléphoniques.

La présente invention s'applique en particulier aux terminaux téléphoniques prévus pour coopérer avec un support de données amovible (tels que classiquement, mais non nécessairement, des terminaux de radiotéléphonie, ou encore des postes fixes). Dans ce dernier cas, il s'agit par exemple de téléphones équipés d'un lecteur de cartes à puce, chaque utilisateur disposant d'une carte définissant ses autorisations et/ou ses options, qui lui permet d'utiliser n'importe quel poste comme si c'était le sien.

Par la suite, on considère plus précisément, sans que cela soit limitatif, le cas des terminaux de radiotéléphonie (ou terminal mobile, ou ME pour "Mobile Equipment" en anglais selon la terminologie GSM pour "Global System for Mobile communications" en anglais), par exemple compatible avec un système de radiocommunication de type GSM, DCS 1800 (pour "Digital Cellular System 1800 MHz" en anglais), PCS 1900 (pour "Personal Communication System" en anglais), DECT (pour "Digital European Cordless Telecommunications" en anglais), ou encore UMTS (pour "Universal Mobile Telecommunication System" en anglais).

Classiquement, les terminaux téléphoniques offrent à l'usager diverses possibilités de réglage, de configuration, de sélection et de mise en oeuvre d'options,... On rappelle, par la suite, différents aspects de ces premières « fonctionnalités », qui sont mises à la disposition de l'utilisateur. Les plus simples, à titre d'exemples, peuvent être le réglage du volume sonore ou de l'intensité de l'éclairage de l'écran, ou une numérotation abrégée.

Le support de données amovible utilisé dans les radiotéléphones précités est généralement appelé carte SIM. En effet, selon les normes actuellement en vigueur, le radiotéléphone comprend des moyens de lecture et/ou d'écriture d'un module d'identification d'abonné pouvant éventuellement piloter le radiotéléphone. Le module d'identification d'abonné est souvent identifié par l'acronyme SIM (pour "Subscriber Identity Module" en anglais selon la terminologie GSM), ou encore DAM (pour "DECT Authentication Mobile" en anglais selon la terminologie DECT).

La carte SIM met également diverses fonctionnalités à la disposition de l'usager sous la forme d'un menu, comme présenté dans les spécifications techniques de la norme GSM ("GSM technical specification ", GSM 11.14, version 5.4.0). Elle peut notamment proposer des accès à des services fournis par l'opérateur délivrant la carte ou par des prestataires agréés par lui.

La consultation et la mise en oeuvre de ces secondes fonctionnalités se fait de façon similaire à celle proposée directement par le terminal, à l'aide de l'écran et du clavier de ce dernier.

Selon l'art antérieur, il existe des systèmes pour le chargement et/ou l'exécution automatique de fonctionnalités dans une carte SIM, comme présenté dans le brevet français n°2 761 219. Un objectif de ces systèmes est de simplifier l'utilisation des différentes fonctionnalités offertes aux détenteurs de cartes à puces applicatives (cartes SIM) et de permettre d'exécuter et/ou de charger via le réseau toute information et/ou service ou application à l'instant opportun (lors d'un passage d'une zone à une autre, à une date précise, ...).

Une autre technique, également connue de l'art antérieur et présentée dans le brevet américain n°5 887 266, concerne un procédé d'utilisation d'une fonctionnalité dans un dispositif de radiocommunication mobile. Dans cette technique, la fonctionnalité peut être mise en oeuvre dans un module d'application, lui-même compris dans une carte (par exemple une carte SIM), et possède un premier mode de fonctionnement, dans lequel elle est passive et commandée par l'unité centrale du dispositif, et un second mode de fonctionnement, dans lequel elle est active et commande l'unité centrale du dispositif.

L'utilisation de ces deux ensembles de fonctionnalités, un premier ensemble correspondant au terminal et un second ensemble correspondant au support de données amovible, peut alors poser des difficultés, tant d'un point de vue technique qu'ergonomique.

Tout d'abord, les présentations et les utilisations peuvent être différentes, ce qui peut poser des difficultés à l'usager.

Par ailleurs, et principalement, on constate souvent qu'une même fonctionnalité peut être offerte simultanément (mais éventuellement sous une forme différente) d'une part par le terminal, et d'autre part par le support de données amovible. En d'autres termes, certaines fonctionnalités sont présentes dans les deux ensembles de fonctionnalités (fonctionnalités « doublons »).

Cette situation est problématique pour l'usager qui ne sait plus où, c'est-à-dire dans quel menu, chercher telle ou telle fonction. Par ailleurs, les réglages ne sont pas forcément identiques (par exemple, une plage de réglage de 1 à 5 pour le volume sonore dans le terminal, et de 1 à 8 dans le support de données amovible).

Du point de vue technique, cela entraîne une duplication inutile de certains moyens (mémoire notamment).

Il n'est cependant pas possible, ou difficile, de regrouper toutes les fonctionnalités dans un seul des deux ensembles. Certaines sont spécifiques au terminal, et d'autres à l'opérateur (donc à l'objet amovible). De plus, dans certains cas, l'opérateur peut souhaiter que la fonctionnalité qu'il propose ait priorité sur celle proposée par le terminal (accès à un service Internet, par exemple).

La présente invention a notamment pour objectif de pallier ces inconvénients de l'état de la technique.

Plus précisément, un des objectifs de la présente invention est de fournir une technique permettant d'optimiser la gestion et l'utilisation des fonctionnalités disponibles dans un terminal téléphonique. Notamment, un objectif de l'invention est de contrôler et d'éviter la présence de fonctionnalités "doublons", c'est-à-dire de présenter une seule fois une même fonctionnalité mise en oeuvre au sein du terminal téléphonique.

Un objectif supplémentaire de l'invention est de fournir une telle technique permettant d'homogénéiser et d'optimiser l'utilisation des différentes fonctionnalités.

Un objectif particulier de l'invention est de fournir une telle technique, permettant de privilégier les fonctionnalités offertes par l'opérateur.

Un autre objectif de l'invention est de fournir un tel terminal téléphonique permettant d'optimiser l'allocation des ressources (notamment en termes de capacité mémoire) disponibles.
Ces différents objectifs, ainsi que d'autres qui apparaîtront par la suite, sont atteints, selon l'invention, à l'aide d'un terminal téléphonique, comprenant des moyens de lecture d'un support de données amovible,
ledit terminal téléphonique comprenant des premiers moyens de sélection et/ou de réglage d'un premier ensemble de fonctionnalités et ledit support de données amovible comprenant des seconds moyens de sélection et/ou de réglage d'un second ensemble de fonctionnalités,
caractérisé en ce qu'il comprend des moyens permettant la suppression dans ledit premier ensemble de fonctionnalités d'une fonctionnalité présente dans ledit second ensemble de fonctionnalités.

En d'autres termes, lorsqu'une fonctionnalité est commune à l'ensemble de fonctionnalités relatif au terminal téléphonique et à l'ensemble de fonctionnalités relatif au support de données amovible, seule la fonctionnalité correspondante prévue au sein de l'ensemble de fonctionnalités du support de données amovible est conservée. L'invention propose donc une amélioration de la gestion des ensembles de fonctionnalités disponibles par la suppression de la ou des fonctionnalités "doublons".

L'utilisation des différentes fonctionnalités est ainsi fortement simplifiée. L'opérateur peut adapter et homogénéiser la présentation de la plupart des fonctionnalités, par exemple au sein d'un ou plusieurs menus et/ou sous-menus.

De façon avantageuse, ladite suppression est systématique, dès que ledit support de données amovible est introduit dans ledit terminal téléphonique.

Un utilisateur du terminal téléphonique n'a de ce fait pas à intervenir pour effectuer une suppression des fonctionnalités "doublons". Cette suppression s'opère donc de façon transparente pour l'utilisateur.

Selon un premier mode de réalisation de l'invention, ledit terminal téléphonique comprend des moyens permettant l'interrogation dudit support de données amovible sur la présence de chacune des fonctionnalités dudit premier ensemble de fonctionnalités dans ledit second ensemble de fonctionnalités, lesdits moyens permettant la suppression des fonctionnalités étant mis en oeuvre pour chacune des fonctionnalités dont la réponse à ladite interrogation est positive.

En d'autres termes, c'est le terminal téléphonique qui prend la main et demande au support de données amovible de lui communiquer les informations concernant son propre ensemble des fonctionnalités, afin de détecter (après comparaison) celles déjà incluses dans l'ensemble de fonctionnalité relatif au terminal téléphonique, avant de la (ou les) supprimer.

Dans un deuxième mode de réalisation de l'invention, ledit support de données amovible comprend des moyens permettant l'information dudit terminal téléphonique des fonctionnalités communes auxdits premier et second ensembles de fonctionnalités que ledit support de données amovible doit supprimer dudit premier ensemble de fonctionnalités.

Dans ce cas, c'est le support de données amovible qui gère la suppression de la (ou des) fonctionnalité(s) commune(s) aux deux ensembles de fonctionnalités disponibles au sein du terminal téléphonique.

Selon un troisième mode de réalisation de l'invention, ledit support de données amovible comprend des moyens permettant de fournir audit terminal téléphonique la liste dudit second ensemble de fonctionnalités, de façon que ledit terminal téléphonique supprime, au sein du premier ensemble de fonctionnalités, des fonctionnalités communes auxdits premier et second ensembles de fonctionnalités.

C'est le terminal téléphonique qui gère alors la suppression (et éventuellement une comparaison préalable) des fonctionnalités communes à partir de la liste des fonctionnalités du support de données amovible.

Avantageusement, il s'agit d'un radiotéléphone d'un système de radiocommunication.
De façon préférentielle, ledit système de radiocommunication appartient au groupe comprenant :
- les systèmes de radiocommunication de type GSM ;
- les systèmes de radiocommunication de type DCS 1800 ;
- les systèmes de radiocommunication de type PCS 1900 ;
- les systèmes de radiocommunication de type UMTS ;
- les systèmes de radiocommunication de type DECT.

Cette liste de systèmes de radiocommunication n'est, bien sûr, nullement exhaustive.

De façon avantageuse, ledit support de données amovible est intégré au moins en partie dans un module d'identification d'abonné.

En d'autres termes, le module amovible peut être la carte SIM, ou une carte (ou autre) indépendante.

L'invention concerne également un procédé de gestion des menus de fonctionnalités mis en oeuvre par le terminal téléphonique décrit précédemment. Un tel procédé comprend notamment une étape de suppression dans ledit premier ensemble de fonctionnalités d'une fonctionnalité présente dans ledit second ensemble de fonctionnalités.

L'invention couvre aussi un support de données amovible susceptible de coopérer avec le terminal téléphonique décrit plus haut. Un tel support comprend en particulier des moyens permettant la suppression dans ledit premier ensemble de fonctionnalités d'une fonctionnalité présente dans ledit second ensemble de fonctionnalités.

D'autres caractéristiques et avantages de l'invention apparaîtront à la lecture de la description suivante de trois modes de réalisation préférentiels de l'invention, donnés à titre de simples exemples indicatifs et non limitatifs, et en référence aux dessins annexés, dans lesquels :
- la figure 1 illustre un schéma simplifié d'un mode de réalisation particulier d'un terminal téléphonique selon l'invention ;
- la figure 2 présente un organigramme simplifié d'un premier mode de réalisation particulier d'un procédé de gestion des menus de fonctionnalités pouvant être mis en oeuvre au sein du terminal téléphonique de la figure 1 ;
- la figure 3 illustre un organigramme simplifié d'un deuxième mode de réalisation particulier d'un procédé de gestion des menus de fonctionnalités pouvant être mis en oeuvre au sein du terminal téléphonique de la figure 1 ; et
- la figure 4 présente un organigramme simplifié d'un troisième mode de réalisation particulier d'un procédé de gestion des menus de fonctionnalités pouvant être mis en oeuvre au sein du terminal téléphonique de la figure 1.

L'invention concerne donc un terminal téléphonique permettant notamment de gérer la présence de fonctionnalités "doublons" au sein du terminal téléphonique.

Dans la suite de la présente description, on considère le cas d'un radiotéléphone (ou terminal téléphonique mobile) d'un système de radiocommunication de type GSM. Il est clair cependant que l'invention s'applique à tout type de terminal téléphonique (fixe ou mobile). L'homme du métier saura aisément transposer l'invention notamment au cas d'un terminal téléphonique de type fixe.

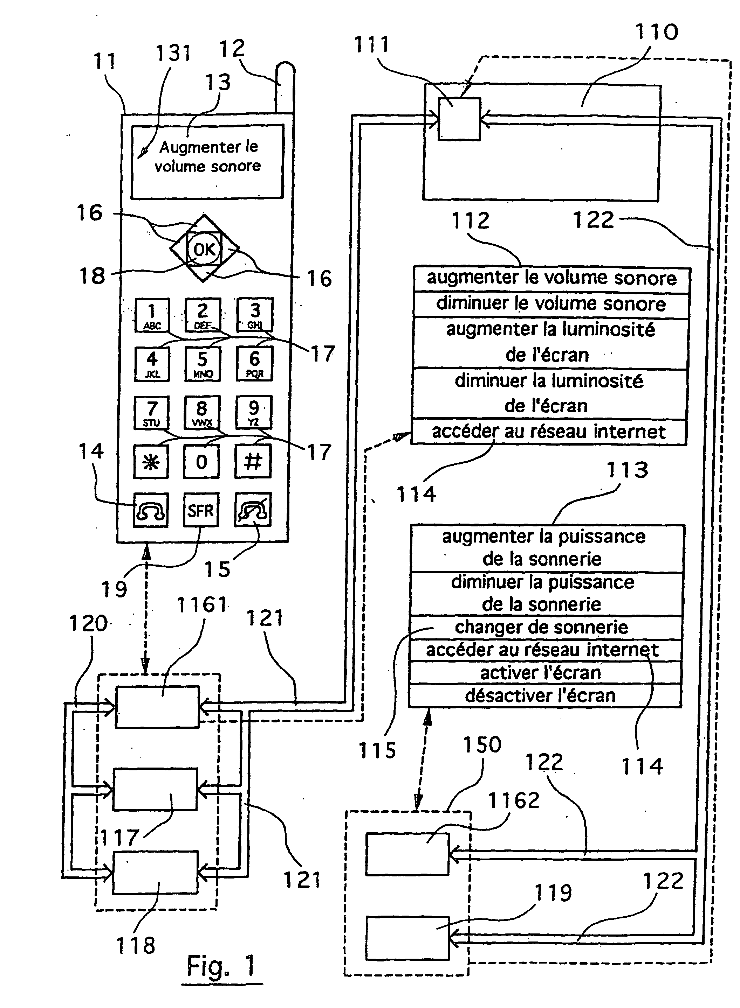

On présente maintenant, en relation avec le schéma simplifié de la figure 1, un tel terminal téléphonique, mettant en oeuvre l'invention.

De façon classique, un terminal 11 radio-téléphonique comprend notamment :
- une antenne 12 permettant l'échange de signaux (émission et/ou réception) avec une station de base (non représentée) ;
- un écran 13 de visualisation permettant notamment de visualiser des menus proposant des fonctionnalités.
- des moyens 117, 118 de gestion d'un premier ensemble 112 de fonctionnalités, stockées dans une mémoire dont les emplacements mémoire sont prévus à cet effet au sein du terminal 11 téléphonique ; et
- un clavier présentant une pluralité de touches dont notamment :
   - une touche 14 de prise de ligne, permettant l'établissement d'une communication ;
   - une touche 15 de rupture de ligne, permettant d'interrompre une communication précédemment établie ;
   - des touches 16 de déplacement horizontal et vertical et/ou de défilement permettant notamment de déplacer un curseur au sein du premier menu et/ou de faire défiler les fonctionnalités du premier menu, sur la première ligne de l'écran 13, face à un repère 131 ;
   - des touches 17 de numérotation et/ou d'entrée de donnée(s) alphanumérique(s) et/ou de code(s) permettant notamment de composer un numéro de téléphone et/ou un code et/ou de définir un message court ;
   - une touche 18 de sélection permettant notamment de sélectionner une fonctionnalité au sein du menu visualisé à l'écran 13. La fonctionnalité sélectionnée est, dans l'exemple illustré, celle qui se trouve sur la première ligne de l'écran 13, ou celle qui est face au repère référencé 131 ("augmenter le volume sonore") ; et
   - une touche 19 d'accès direct à un menu principal géré par un opérateur, (telle que par exemple la touche "SFR" (marque déposée)), à partir duquel un utilisateur du terminal 11 téléphonique peut accéder à un second menu de fonctionnalités.

Les premiers moyens 117 de sélection du premier ensemble 112 de fonctionnalités coopèrent avec les moyens 118 de réglage du premier ensemble 112 de fonctionnalités. Les premiers moyens 117 de sélection permettent de sélectionner une fonctionnalité parmi le premier ensemble 112 de fonctionnalités. Les premiers moyens 118 de réglage permettent d'accéder et/ou de régler une fonctionnalité du premier ensemble 112 de fonctionnalités, telle que par exemple la fonctionnalité référencée 114 ("accéder au réseau Internet"), afin d'accéder à la fonctionnalité en question. Les moyens 117 de sélection et les moyens 118 de réglage du premier ensemble de fonctionnalités sont reliés, via une première liaison 120, à une première mémoire 1161.

La première mémoire 1161 est par exemple prévue au sein du terminal téléphonique 11.

La deuxième mémoire 1162 est avantageusement intégrée dans le support de données amovible décrit plus loin.

Le terminal 11 téléphonique coopère en effet avec un support amovible destiné à être inséré dans un lecteur correspondant du terminal 11 téléphonique. Le support amovible de données est par exemple un module 110 d'identification d'abonné (ou SIM).

Ce module 110 d'identification d'abonné comporte des moyens 111 de traitement et de gestion de données, qui constituent un organe central de décision. Les moyens 111 de traitement et de gestion de données permettent notamment d'accéder, outre à la première mémoire 1161 via une deuxième liaison 121, à des moyens 150 intégrés au sein du module 110 d'identification d'abonné, via une troisième liaison 122.

Ces moyens 150 comprennent notamment une seconde mémoire 1162 qui comporte un second ensemble 113 de fonctionnalités.
Les moyens 111 de traitement et de gestion des données permettent de sélectionner et/ou de régler au moins certaine(s) fonctionnalité(s) du second ensemble 113 de fonctionnalités stocké au sein de la mémoire 1162. En outre, les moyens 111 de traitement et de gestion des données sont reliés, via la deuxième liaison 121, aux premiers moyens 117 de sélection ainsi qu'aux premiers moyens de réglage, de façon à pouvoir contrôler ces derniers.

Les fonctionnalités du second ensemble 113 peuvent affecter directement ou indirectement le terminal Il téléphonique, telles que par exemple la fonctionnalité référencée 115 (représenté par "le changement de sonnerie en cas d'appel téléphonique"). De même que pour les fonctionnalités du premier ensemble 112, chaque fonctionnalité du second ensemble 113 est notamment accessible à partir de la touche 19 d'accès à un menu principal, via un second menu.

Le couple terminal 11 téléphonique/module 110 d'identification d'abonné offre bien sûr d'autres fonctionnalités que celles représentées, telles que par exemple :
- gérer des numéros téléphoniques ;
- gérer des messages courts ;
- gérer des opérateurs réseau préférentiels ;
- gérer une liste de numéros d'appel fixe à laquelle l'abonné souhaite se restreindre ;
- gérer la gestion de l'itinérance dans le système de radiocommunication concerné ;
- gérer le numéro d'identification international de l'abonné mobile selon les normes IMSI-TMSI ;
- gérer des données caractéristiques de la station de base associée à la cellule dans laquelle le terminal 11 téléphonique se trouve ;
- authentifier l'abonné vis-à-vis du réseau ;
- authentifier, de façon passive, l'abonné par un code secret (ou PIN pour "Personal Identification Number" en anglais) ;
- accéder à divers services, tels que :
   - accès au réseau Internet ;
   - accès à un service d'information et/ou de réservation (loisir, taxi, cinéma, banque, ...) ;
   - contenu de son compte et/ou temps de crédit de communication ;
   - ....

Ces différentes fonctionnalités incluent donc celles des premier et second ensembles 112, 113 de fonctionnalités et au moins certaines d'entre elles sont gérées via une boîte à outils logicielle (ou "SIM Application Toolkit" selon la terminologie GSM) permettant au module 110 d'identification d'abonné de contrôler le terminal 11 téléphonique avec laquelle il coopère. Pour mettre en oeuvre cette boîte à outils, on tient compte notamment de la recommandation GSM 11.11 phase 2⁺, qui indique les mécanismes permettant l'interopérabilité entre le terminal 11 téléphonique et le module 110 d'identification d'abonné.

Selon l'invention, le terminal 11 téléphonique comprend des moyens 119 permettant la suppression dans le premier ensemble 112 de fonctionnalités d'une fonctionnalité 114 présente dans le second ensemble 113 de fonctionnalités. En d'autres termes, grâce à la mise en oeuvre du procédé selon l'invention, chaque fonctionnalité du premier ensemble 112 des fonctionnalités (stockées au sein de la première mémoire 1161) est distincte de chacune des fonctionnalités comprises au sein du second ensemble 113 de fonctionnalités (stockées au sein de la troisième mémoire 1163).

Les moyens 119 permettant la suppression sont, quant à eux, préférentiellement compris au sein du module 110 d'identification d'abonné, et connectés, via les moyens 111 de traitement et de gestion des données puis la première liaison 120, à la première mémoire 1161.

Selon une variante de réalisation, les moyens 119 permettant la suppression peuvent être intégrés au sein du terminal 11 téléphonique.

Les moyens 119 permettant la suppression peuvent (préalablement à la suppression) comparer la nature de chaque fonctionnalité du premier ensemble 112 de fonctionnalités avec celle du second ensemble 113 de fonctionnalités avant de supprimer (au sein du premier ensemble 112 de fonctionnalités) celle(s) des fonctionnalités qui est(sont) commune(s). Les fonctionnalités doublons sont par exemple détectées par analyse du contenu de chacune des procédures mises en oeuvre par les différentes fonctionnalités.

Ce sont les moyens 111 de traitement et de gestion des données du module 110 d'identification d'abonné qui pilotent, via une troisième liaison 122, les moyens 119 permettant la suppression.

Le cas échéant, une nouvelle fonctionnalité peut être notamment introduite dans le second ensemble 113 de fonctionnalités à l'aide d'un téléchargement contrôlé par un opérateur et/ou un fournisseur de service. Une nouvelle fonctionnalité peut également être intégrée par un démasquage d'une fonctionnalité présente au sein du second ensemble 113 de fonctionnalités, lors par exemple d'une prise, par l'utilisateur du terminal 11 téléphonique, d'un nouvel abonnement auprès d'un opérateur et/ou un fournisseur de services.

Selon l'invention, la suppression est effectuée de façon systématique, dès que le module 110 d'identification d'abonné est introduit dans le lecteur du terminal 1 téléphonique. Un utilisateur du terminal 11 téléphonique n'a donc pas à se soucier de la gestion des premier et second ensembles 112, 113 de fonctionnalités proposées (et donc des menus correspondants), ce qui améliore l'ergonomie du terminal 11 téléphonique. Une suppression peut consister par exemple en un masquage d'une fonctionnalité incluse dans le second ensemble 113 de fonctionnalités (ou éventuellement le premier ensemble 112 de fonctionnalités).

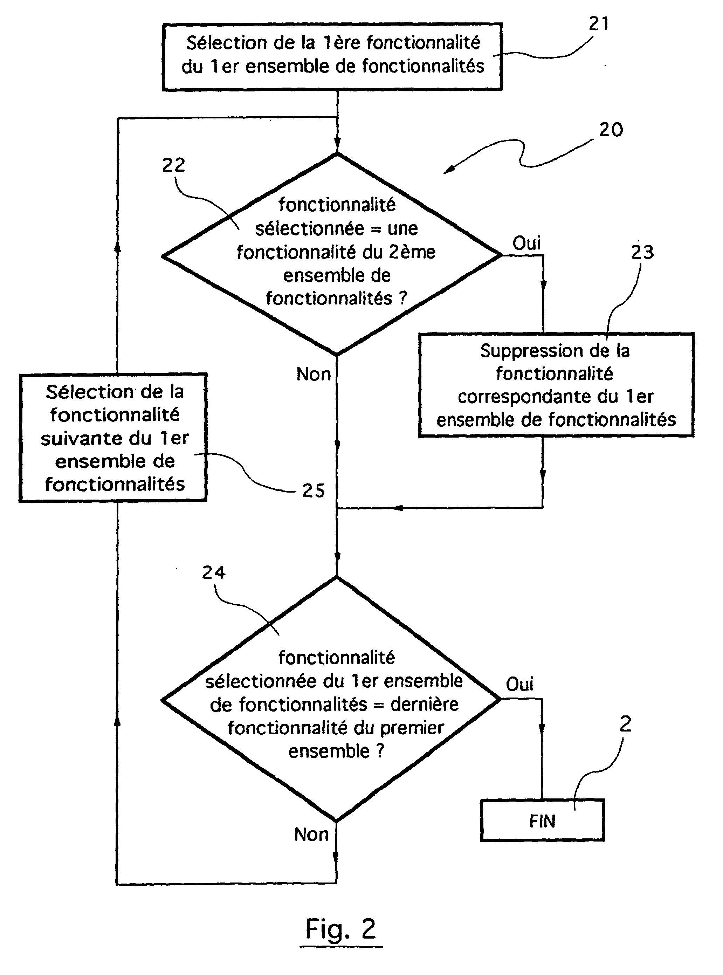

On décrit ci-dessous, en relation avec les trois organigrammes simplifiés des figures 2 à 4, trois modes de réalisation particuliers du procédé de gestion des menus de fonctionnalités pouvant être mis en oeuvre au sein du terminal 11 téléphonique (cf figure 1).

Selon un premier mode de réalisation (cf figure 2), le procédé 20 de gestion des menus de fonctionnalités comprend une étape 21 de sélection par le terminal 11 téléphonique de la première fonctionnalité du premier ensemble 112 de fonctionnalités.

Le terminal 11 téléphonique effectue une étape 22 d'interrogation du module 110 d'identification d'abonné sur la présence de la fonctionnalité sélectionnée du premier ensemble 112 de fonctionnalités au sein du second ensemble 113 de fonctionnalités. Cette étape 22 d'interrogation consiste essentiellement à comparer la fonctionnalité sélectionnée (comprise dans le premier ensemble 112 de fonctionnalités relatif au terminal 11 téléphonique) avec chaque fonctionnalité du second ensemble 113 de fonctionnalités (relatif au module 110 d'identification d'abonné), afin de détecter si la fonctionnalité sélectionnée existe au sein du second ensemble 113 de fonctionnalités.

Dans l'affirmative, c'est-à-dire si la fonctionnalité sélectionnée du premier ensemble 112 de fonctionnalités correspond à une fonctionnalité du second ensemble 113 de fonctionnalités, le terminal 11 téléphonique (pilotépar les moyens 111 de traitement et de gestion des données, suite par exemple à une observation d'au moins certaines fonctionnalités présentes au sein du second ensemble 113 de fonctionnalités) décide de supprimer (23) la fonctionnalité sélectionnée du premier ensemble 112 de fonctionnalités. Par conséquent, seule la fonctionnalité correspondante reste présente au sein du second ensemble 113 de fonctionnalités. Lorsque la suppression des fonctionnalités déjà présentes au sein du second ensemble 113 de fonctionnalités a été effectuée, on passe à une étape 24 d'analyse de la place de la fonctionnalité au sein du premier ensemble 112 de fonctionnalités explicitée ci-après.

Dans le cas contraire, c'est-à-dire si la fonctionnalité sélectionnée du premier ensemble 112 de fonctionnalités n'est pas comprise dans le second ensemble 113 de fonctionnalité, le terminal 11 téléphonique (piloté par les moyens 111 de traitement et de gestion des données) analyse (24) si la fonctionnalité sélectionnée du premier ensemble 112 de fonctionnalités est la dernière fonctionnalité du premier ensemble 112 de fonctionnalités.

Si une nouvelle procédure d'interrogation sur la présence, au sein du second ensemble 113 de fonctionnalités, d'une fonctionnalité du premier ensemble 112 de fonctionnalités est requise (c'est-à-dire si la fonctionnalité sélectionnée du premier ensemble 112 de fonctionnalités n'est pas la dernière fonctionnalité du premier ensemble 112 de fonctionnalités), le terminal Il téléphonique (piloté par les moyens 111 de traitement et de gestion des données) sélectionne (25) la fonctionnalité suivante du premier ensemble 112 de fonctionnalités. Ensuite, le terminal 1 téléphonique réitère les étapes 22 à 25 précitées jusqu'à la sélection de la dernière fonctionnalité du premier ensemble 112 de fonctionnalités.

Enfin, une fois que toutes les fonctionnalités du premier ensemble 112 ont été sélectionnées puis comparées avec celles du second ensemble 113 de fonctionnalités (et éventuellement supprimées pour certaine(s) d'entre elles), on passe à une étape 26 qui constitue la fin du procédé de gestion des menus de fonctionnalités.

Selon une variante de réalisation du procédé selon l'invention (non représentée), on peut remplacer les termes "premier ensemble 112 de fonctionnalités" par les termes "second ensemble 113 de fonctionnalités" dans les étapes précitées 21, 24 et 25, ainsi que les termes "second ensemble 113 de fonctionnalités" par les termes de "premier ensemble 112 de fonctionnalités", de l'étape référencée 22.

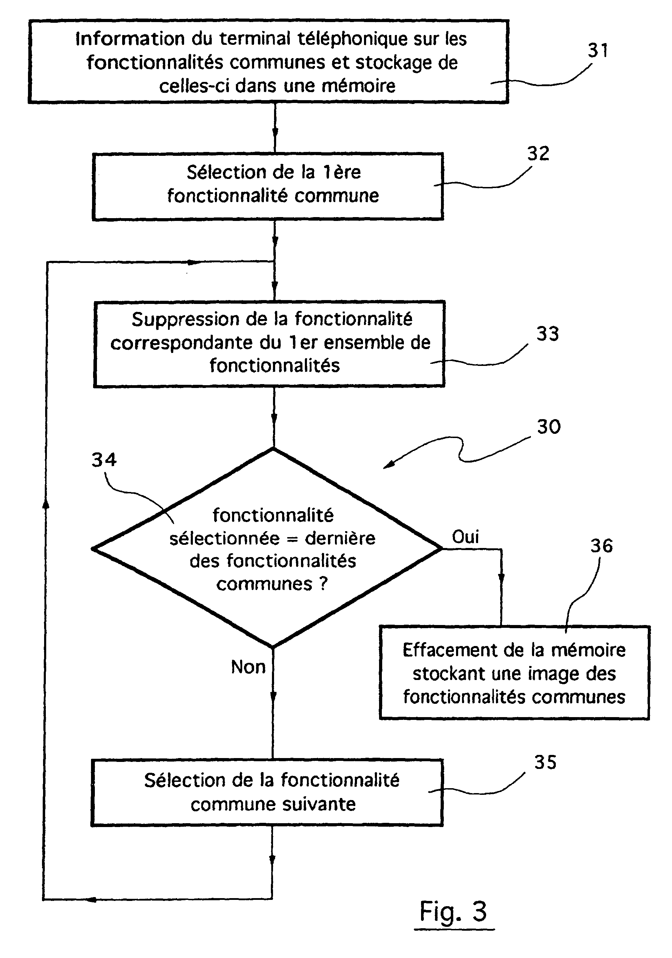

Selon un second mode de réalisation de l'invention (cf figure 3), un procédé 30 de gestion des menus de fonctionnalités comprend une étape 31 d'information du terminal 11 téléphonique des fonctionnalités communes aux premier et second ensembles 112, 113 de fonctionnalités. Cette étape 31 d'information repose sur le fait que le module 110 d'identification d'abonné communique, de façon automatique, au terminal 11 téléphonique l'ensemble des fonctionnalités déjà présentes au sein du second ensemble 113 de fonctionnalités. Le terminal 11 téléphonique stocke, par exemple, de façon temporaire, une image de l'ensemble des fonctionnalités communes (au premier et second ensembles 112, 113 de fonctionnalités), dans une mémoire tampon (non représentée). Le terminal 11 téléphonique connaît donc les fonctionnalités qu'il doit supprimer au sein du premier ensemble 112 de fonctionnalités.

Puis, le terminal 11 téléphonique sélectionne (32) la première fonctionnalité commune de l'image des fonctionnalités communes (stockée dans la mémoire tampon).

Ensuite, le terminal 11 téléphonique cherche et supprime (33) la fonctionnalité correspondante à cette fonctionnalité commune au sein du premier ensemble 112 de fonctionnalités.

La suppression de la fonctionnalité commune au sein du premier ensemble 112 de fonctionnalités étant effectuée, le terminal 11 téléphonique analyse (34) si la fonctionnalité commune sélectionnée est la dernière des fonctionnalités communes.

Lorsque la réponse est négative (c'est-à-dire si la fonctionnalité commune sélectionnée n'est pas la dernière des fonctionnalités communes dont la fonctionnalité correspondante au sein du premier ensemble 112 de fonctionnalités a été précédemment supprimée), le terminal 11 téléphonique sélectionne (35) la fonctionnalité commune suivante de l'image de l'ensemble des fonctionnalités communes. Puis, le terminal 11 téléphonique réitère les étapes 33 à 35 précitées jusqu'à sélectionner et supprimer la fonctionnalité correspondante à l'image de la dernière des fonctionnalités communes.

Une fois que la fonctionnalité commune sélectionnée (dont la fonctionnalité correspondante au sein du premier ensemble 112 de fonctionnalités a été précédemment supprimée) est la dernière de l'ensemble des fonctionnalités communes (toutes les fonctionnalités "doublons" ayant été supprimées du premier ensemble 112 de fonctionnalités), le terminal 11 téléphonique effectue (36) un effacement complet de la mémoire stockant une image des fonctionnalités communes. La mémoire tampon étant libérée, elle peut, à nouveau, être utilisée notamment pour une éventuelle autre procédure de suppression des fonctionnalités communes au sein du premier ensemble 112 de fonctionnalités.

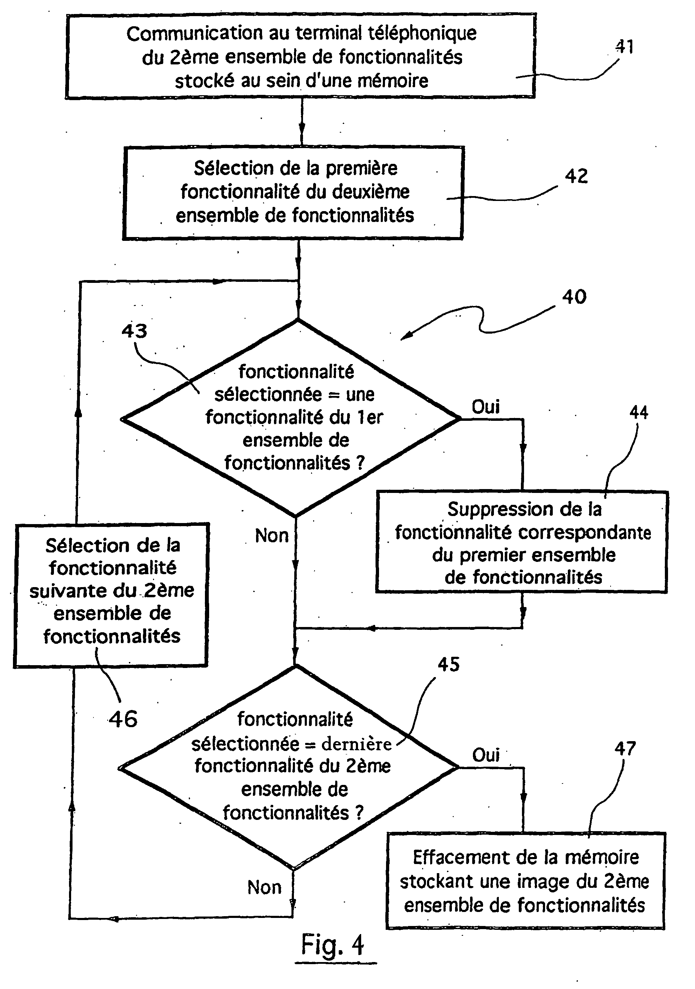

Enfin, selon un troisième mode de réalisation du procédé de gestion des menus de fonctionnalités (cf figure 4), le module 110 d'identification d'abonné commence par fournir (41) au terminal 11 téléphonique la liste complète des fonctionnalités du second ensemble 113 de fonctionnalités. Le terminal 11 téléphonique stocke par exemple, de façon provisoire, une image identique au second ensemble 113 de fonctionnalités au sein d'une mémoire tampon.

Puis, le terminal 11 téléphonique sélectionne (42) la première fonctionnalité de l'image du second ensemble 113 de fonctionnalités.

Le terminal 11 téléphonique compare (43) ensuite la fonctionnalité sélectionnée de l'image du second ensemble 113 de fonctionnalités avec chaque fonctionnalité du premier ensemble 112 de fonctionnalités.

Lorsque le terminal 11 téléphonique détecte une fonctionnalité identique à la fonctionnalité sélectionnée, le terminal 11 téléphonique (piloté par les moyens 111 de traitement et de gestion des données) effectue (44) une suppression de la fonctionnalité correspondante au sein du premier ensemble 112 de fonctionnalités. Puis, on passe à une étape 45 d'analyse de la place de la fonctionnalité au sein de l'image du second ensemble 113 de fonctionnalités, décrite plus bas.

Si le terminal 11 téléphonique ne détecte, au sein du premier ensemble 112 de fonctionnalités, aucune fonctionnalité identique à la fonctionnalité sélectionnée, le terminal 11 téléphonique (piloté par les moyens 111 de traitement et de gestion des données) analyse (45) si la fonctionnalité sélectionnée est la dernière fonctionnalité de l'image du second ensemble 113 de fonctionnalités.

Dans la négative, c'est-à-dire si une nouvelle procédure de comparaison d'une autre fonctionnalité du second ensemble 113 de fonctionnalités est requise, on sélectionne (46) la fonctionnalité suivante de l'image du second ensemble 113 de fonctionnalités. Puis, on réitère les opérations 43 à 46 jusqu'à la sélection de la dernière fonctionnalité de l'image du second ensemble 113 de fonctionnalités.

Enfin, lorsque la fonctionnalité sélectionnée est la dernière de l'image du second ensemble 113 de fonctionnalités (et donc que la ou les suppressions nécessaires ont été effectuées), le terminal 11 téléphonique (piloté par les moyens 111 de traitement et de gestion des données) opère (47) un effacement de l'image du second ensemble 113 de fonctionnalités de la mémoire tampon, afin de laisser cette dernière libre pour une nouvelle utilisation, (éventuellement pour un autre stockage d'une image d'un nouveau second ensemble 113 de fonctionnalités).

## Revendications

1. Terminal (11) téléphonique, comprenant des moyens de lecture d'un support de données amovible,
ledit terminal (11) téléphonique comprenant des premiers moyens (117) de sélection et/ou (118) de réglage d'un premier ensemble (112) de fonctionnalités et ledit support (110) de données amovible comprenant des seconds moyens (111) de sélection et/ou de réglage d'un second ensemble (113) de fonctionnalités,
caractérisé en que ledit terminal (11) téléphonique comprend des moyens (119) permettant la suppression dans ledit premier ensemble (112) de fonctionnalités d'une fonctionnalité (114) présente dans ledit second ensemble (113) de fonctionnalités.

2. Terminal (11) téléphonique selon la revendication 1, **caractérisé en ce que** ladite suppression est systématique, dès que ledit support (110) de données amovible est introduit dans ledit terminal (11) téléphonique.

3. Terminal (11) téléphonique selon l'une quelconque des revendications 1 et 2, **caractérisé en ce qu'**il comprend des moyens permettant l'interrogation dudit support (110) de données amovible sur la présence de chacune des fonctionnalités dudit premier ensemble (112) de fonctionnalités dans ledit second ensemble (113) de fonctionnalités, lesdits moyens (119) permettant la suppression des fonctionnalités étant mis en oeuvre pour chacune des fonctionnalités dont la réponse à ladite interrogation est positive.

4. Terminal téléphonique selon l'une quelconque des revendications 1 et 2, **caractérisé en ce qu'**il comprend des moyens de réception d'une liste de fonctionnalités communes auxdits premier et second ensembles (112, 113) de fonctionnalités, ladite liste étant fournie audit terminal (11) téléphonique par ledit support (110) de données amovibles.

5. Terminal téléphonique selon l'une quelconque des revendications 1 et 2, **caractérisé en ce qu'**il comprend des moyens de réception d'une liste desdites fonctionnalités du second ensemble (113), ladite liste étant fournie audit terminal (11) téléphonique par ledit support (110) de données amovibles.

6. Terminal (11) téléphonique selon l'une quelconque des revendications 1 à 5, **caractérisé en ce qu'**il s'agit d'un radiotéléphone d'un système de radiocommunication.

7. Terminal (11) téléphonique selon la revendication 6, **caractérisé en ce que** ledit système de radiocommunication appartient au groupe comprenant :
- les systèmes de radiocommunication de type GSM ;
- les systèmes de radiocommunication de type DCS 1800 ;
- les systèmes de radiocommunication de type PCS 1900 ;
- les systèmes de radiocommunication de type UMTS ;
- les systèmes de radiocommunication de type DECT.

8. Terminal (11) téléphonique selon l'une quelconque des revendications 1 à 7, **caractérisé en ce que** ledit support (110) de données amovible est intégré au moins en partie dans un module (110) d'identification d'abonné.

9. Procédé (20, 30, 40) de gestion des menus de fonctionnalités dans un terminal (11) téléphonique comprenant des moyens de lecture d'un support de données amovible,
ledit terminal (11) téléphonique comprenant des premiers moyens (117) de sélection et/ou (118) de réglage d'un premier ensemble (112) de fonctionnalités et ledit support (110) de données amovible comprenant des seconds moyens (111) de sélection et/ou de réglage d'un second ensemble (113) de fonctionnalités,
**caractérisé en ce qu'**il comprend une étape (23, 33, 44) de suppression dans ledit premier ensemble de fonctionnalités d'une fonctionnalité présente dans ledit second ensemble de fonctionnalités.

10. Support (110) de données amovible destiné à coopérer avec un terminal (11) téléphonique, ledit terminal (11) téléphonique comprenant des moyens de lecture d'un support de données amovible,
ledit terminal (11) téléphonique comprenant des premiers moyens (117) de sélection et/ou (118) de réglage d'un premier ensemble (112) de fonctionnalités et ledit support (110) de données amovible comprenant des seconds moyens (111) de sélection et/ou de réglage d'un second ensemble (113) de fonctionnalités,
**caractérisé en ce que** ledit support (110) de données amovible comprend des moyens (119) permettant la suppression dans ledit premier ensemble (112) de fonctionnalités d'une fonctionnalité (114) présente dans ledit second ensemble (113) de fonctionnalités.

## Patentansprüche

1. Telefonterminal (11), welches über Mittel zum Lesen eines herausnehmbaren Datenträgers verfügt,
wobei dieses Telefonterminal (11) erste Mittel zum Wählen (117) und/oder zum Regeln (118) einer ersten Gruppe (112) von Funktionalitäten umfasst und wobei der herausnehmbare Datenträger (110) zweite Mittel zum Wählen (111) und/oder zum Regeln einer zweiten Gruppe (113) von Funktionalitäten umfasst,
**dadurch gekennzeichnet, dass** dieses Telefonterminal (11) Mittel (119) aufweist, welche in der ersten Gruppe (112) von Funktionalitäten das Löschen einer in der zweiten Gruppe (113) von Funktionalitäten enthaltenen Funktionalität (114) ermöglichen.

2. Telefonterminal (11) nach Anspruch 1, **dadurch gekennzeichnet, dass** das Löschen systematisch erfolgt, sobald der herausnehmbare Datenträger (110) in das Telefonterminal (11) eingeführt wird.

3. Telefonterminal (11) nach einem der Ansprüche 1 oder 2, **dadurch gekennzeichnet, dass** es über Mittel zum Abfragen des herausnehmbaren Datenträgers (110) bezüglich des Vorhandenseins einer jeden Funktionalität der ersten Gruppe (112) von Funktionalitäten in der zweiten Gruppe (113) von Funktionalitäten verfügt, wobei diese das Löschen von Funktionalitäten ermöglichenden Mittel (119) für jede Funktionalität zum Einsatz kommt, die eine positive Antwort auf die Befragung ergibt.

4. Telefonterminal nach einem der Ansprüche 1 oder 2, **dadurch gekennzeichnet, dass** es Mittel zum Empfang einer Liste von Funktionalitäten aufweist, die den ersten und zweiten Gruppen (112, 113) von Funktionalitäten gemeinsam sind, wobei diese Liste dem Telefonterminal (11) durch den herausnehmbaren Datenträger (110) zugeführt wird.

5. Telefonterminal nach einem der Ansprüche 1 oder 2, **dadurch gekennzeichnet, dass** es Mittel zum Empfang einer Liste von Funktionalitäten der zweiten Gruppe (113) aufweist, wobei diese Liste dem Telefonterminal (11) durch den herausnehmbaren Datenträger (110) zugeführt wird.

6. Telefonterminal nach einem der Ansprüche 1 bis 5, **dadurch gekennzeichnet, dass** es sich um ein Funktelefon eines Funkkommunikationssystems handelt.

7. Telefonterminal (11) nach Anspruch 6, **dadurch gekennzeichnet, dass** das Funkkommunikationssystem der folgendes umfassenden Gruppe gehört:
- Funkkommunikationssysteme des Typs GSM;
- Funkkommunikationssysteme des Typs DCS 1800;
- Funkkommunikationssysteme des Typs PCS 1900;
- Funkkommunikationssysteme des Typs UMTS;
- Funkkommunikationssysteme des Typs DECT.

8. Telefonterminal (11) nach einem der Ansprüche 1 bis 7, **dadurch gekennzeichnet, dass** der herausnehmbare Datenträger (110) mindestens teilweise in einem Modul (110) zum identifizieren von Mitgliedern integriert ist.

9. Verfahren (20, 30, 40) zum Verwalten von Menüs von Funktionalitäten in einem Telefonterminal (11), welches über Mittel zum Lesen eines herausnehmbaren Datenträgers verfügt,
wobei dieses Telefonterminal (11) erste Mittel zum Wählen (117) und/oder zum Regeln (118) einer ersten Gruppe (112) von Funktionalitäten umfasst, und wobei der herausnehmbare Datenträger (110) zweite Mittel zum Wählen (111) und/oder zum Regeln einer zweiten Gruppe (113) von Funktionalitäten umfasst,
**dadurch gekennzeichnet, dass** es in der ersten Gruppe von Funktionalitäten über einen Schritt (23, 33, 44) zum Löschen einer in der zweiten Gruppe von Funktionalitäten vorhandenen Funktionalität verfügt.

10. Herausnehmbarer Datenträger (110), der mit einem Telefonterminal (11) zusammenwirkt, wobei dieses Telefonterminal (11) über Mittel zum Lesen eines herausnehmbaren Datenträgers verfügt,
wobei dieses Telefonterminal (11) erste Mittel zum Wählen (117) und/oder zum Regeln (118) einer ersten Gruppe (112) von Funktionalitäten umfasst, und wobei der herausnehmbare Datenträger (110) zweite Mittel zum Wählen (111) und/oder zum Regeln einer zweiten Gruppe (113) von Funktionalitäten umfasst,
**dadurch gekennzeichnet, dass** der herausnehmbare Datenträger (110) Mittel (119) aufweist, die das Löschen in der ersten Gruppe (112) von Funktionalitäten einer in der zweiten Gruppe (113) von Funktionalitäten vorhandenen Funktionalität (114) ermöglichen.

## Claims

1. Telephone terminal (11) including means for reading a removable data medium,
the said telephone terminal (11) including first means (117) for selecting and/or (118) adjusting a first set (112) of functions, and the said removable data medium (110) including second means (111) for selecting and/or adjusting a second set (113) of functions,
**characterized in that** the said telephone terminal (11) includes means (119) which make it possible to delete, in the said first set (112) of functions, a function (114) which is present in the said second set (113) of functions.

2. Telephone terminal (11) according to Claim 1, **characterized in that** the said deletion is systematic, from when the said removable data medium (110) is introduced into the said telephone terminal (11).

3. Telephone terminal (11) according to any one of Claims 1 and 2, **characterized in that** it includes means which make it possible to interrogate the said removable data medium (110) for the presence of each of the functions of the said first set (112) of functions in the said second set (113) of functions, the said means (119) making it possible to delete functions which are implemented for each of the functions of which the response to the said interrogation is positive.

4. Telephone terminal (11) according to any one of Claims 1 and 2, **characterized in that** it includes means for receiving a list of functions which are common to the said first and second sets (112, 113) of functions, the said list being supplied to the said telephone terminal (11) by the said removable data medium (110).

5. Telephone terminal (11) according to any one of Claims 1 and 2, **characterized in that** it includes means for receiving a list of the said functions of the second set (113), the said list being supplied to the said telephone terminal (11) by the said removable data medium (110).

6. Telephone terminal (11) according to any one of Claims 1 to 5, **characterized in that** it is a mobile telephone of a radiocommunication system.

7. Telephone terminal (11) according to Claim 6, **characterized in that** the said radiocommunication system belongs to the list including:
- radiocommunication systems of GSM type;
- radiocommunication systems of DCS 1800 type;
- radiocommunication systems of PCS 1900 type;
- radiocommunication systems of UMTS type;
- radiocommunication systems of DECT type.

8. Telephone terminal (11) according to any one of Claims 1 to 7, **characterized in that** the said removable data medium (110) is integrated at least in part into a subscriber identification module (110).

9. Method (20, 30, 40) of managing function menus in a telephone terminal (11) including means for reading a removable data medium,
the said telephone terminal (11) including first means (117) for selecting and/or (118) adjusting a first set (112) of functions, and the said removable data medium (110) including second means (111) for selecting and/or adjusting a second set (113) of functions,
**characterized in that** it includes a stage (23, 33, 44) of deletion, in the said first set of functions, of a function which is present in the said second set of functions.

10. Removable data medium (110) which is intended to cooperate with a telephone terminal (11), the said telephone terminal (11) including means for reading a removable data medium,
the said telephone terminal (11) including first means (117) for selecting and/or (118) adjusting a first set (112) of functions, and the said removable data medium (110) including second means (111) for selecting and/or adjusting a second set (113) of functions,
**characterized in that** the said removable data medium (110) includes means (119) which make it possible to delete, in the said first set (112) of functions, a function (114) which is present in the said second set (113) of functions.
